# EUROPEAN PATENT SPECIFICATION

(11) **EP 3 552 469 B1**
(45) Date of publication and mention of the grant of the patent: **13.09.2023**
(21) Application number: 17869605.0
(22) Date of filing: 08.11.2017
(51) Int. Cl.: A01B 21/06

(54) **VIBRATION ISOLATION DEVICE FOR AGRICULTURAL MACHINES**
SCHWINGUNGSISOLATIONSVORRICHTUNG FÜR LANDWIRTSCHAFTLICHE MASCHINEN
DISPOSITIF D'ISOLATION DU BROUTEMENT DANS DES ENGINS AGRICOLES

(30) Priority: 08.11.2016 ES 201631325 U
(43) Date of publication of application: 16.10.2019
(73) Proprietor: Cancela Rodriguez, Javier, 15684 Anxeriz, Tordoia (ES)
(72) Inventor: Cancela Rodriguez, Javier, 15684 Anxeriz, Tordoia (ES)
(74) Representative: De Castro Hermida, José Luis
(86) International application number: PCT/ES2017/070739
(87) International publication number: WO 2018/087410

(56) References cited:
- WO-A1-2004/074708
- WO-A1-2014/031067
- WO-A1-2014/079449
- WO-A1-2014/079449
- FR-A1- 2 386 976
- SE-C2- 501 706
- SE-L- 9 003 516
- US-A- 1 980 580
- US-A- 5 678 930
- US-A- 5 713 418
- US-A- 5 713 418
- US-B1- 6 244 355
- US-B1- 7 987 917
- US-B1- 7 987 917

## Description

### OBJECT OF THE INVENTION

The invention, as exposed on the wording of the present specification, relates to a vibration isolation device for agricultural machines which imparts to the function it is intended to, advantages and characteristics, which will be described in detail below and which mean an improvement of the current state of the art.

More specifically, the object of the invention is focused on a vibration isolation device based on rubber elements applicable to agricultural or similar working machines that incorporate rollers, provided or not with work tools, fastened to them by means of supporting structures, which, unlike the existing systems, provides this insulation in all directions to ensure, not only the isolation of the supporting structure but also that the vibratory loads do not destroy the isolating elements themselves, for which purpose it is configured based on multiple rubber elements incorporated radially and with a certain inclination on two crowns on both sides of the roller, being located as a link between it and the supporting structure.

### APPLICATION FIELD OF THE INVENTION

The application field of the present invention is part of the industry sector dedicated to the manufacture of accessories for agricultural machines and vehicles, specifically focusing on the field of vibration isolation systems.

### BACKGROUND OF THE INVENTION

Currently, there is a series of machines of agricultural nature for soil working of dragged type that, due to their typology, are built with a supporting structure or chassis and working rolls, which can be one or several.

These machines usually incorporate the cutting/working tools on circular rollers.

These cutting tools are arranged longitudinally or at an angle to the shaft and generate heavy loads during their rotation in the ground.

Said tools generate staggered impacts when interacting on the ground and, by action and reaction, these impacts are transmitted at the same time to the chassis or frame.

These actions or charges, due to the speed, greatly increase their frequency by being transmitted to the structure as a vibration.

Also in the case of compaction rollers without built-in tools, something similar could occur, although in a more attenuated manner, due to irregularities and/or surface obstacles in the ground.

These vibrations are transmitted along the supporting structure of the machine, being very damaging to the mechanical components, since they substantially reduce their lifetime due to fatigue and, in addition, they even transmit this vibration to the tractor so that the cabin is very little ergonomic for the operator.

Currently there are machines that incorporate systems to solve this problem, but they provide unsuccessful solutions that, far from solving the vibrations, keep them and at the same time generate added problems due to the failure of the built-in system.

SE501706C2 is considered the closest prior art. It discloses a vibration damper made of a single rubber element, where both sides of the rubber element are not coplanar, and where the roller is placed on the concave side. WO2004074708A1, WO2014031067A1 and US1980580A are also considered prior art.

Therefore, the currently present systems do not provide a conclusive solution to the problem, because they incorporate an isolation, focusing on the reduction of vibration mainly in a single direction of the rotating element and neglecting or not taking significantly into account the vibratory loads in the other directions of space.

These systems therefore focus on the isolation in the vertical direction (perpendicular to the ground plane) whose main receiver is the supporting structure. To carry out such insulation, they incorporate rubber elements arranged in the absorption position in a main direction and leaving the rest of the components to the absorption capacity of the elastic support used in each case.

The roller, during its rotation, at the moment in which each cutting tool interacts with the ground, generates radial loads that will decompose in different positions of the X and Y axis, such that the structure or arm that pulls the roller it is in a continuous situation of "pulling" and "pushing" on the horizontal axis and at the same time of traction and compression on the vertical axis. Therefor the isolating elements of these vibrations should cover both directions and with the whole range of angles of the possible loads, the object of the present invention being the development of a new type of vibration isolation system that covers the whole range of possibilities. The shortcomings of the known prior art are overcome by means of a vibration isolation device according to claim 1.

### EXPLANATION OF THE INVENTION

Thus, the vibration isolation device for agricultural machines proposed by the invention is configured as a novelty within its field of application, since, being the characterizing details that make it possible and that distinguish it conveniently gathered in the final claims that accompany the present description.

Specifically, what the invention proposes, as pointed out above, is a vibration isolation device for agricultural machines that, in a novel way, performs said isolation in all directions to ensure, not only the isolation of the supporting structure but also that the vibratory loads do not get to destroy the isolating elements themselves due to premature fatigue due to an entry in resonance.

For this purpose, the device is configured essentially from a crown incorporated on each side of the roller, so that both are opposed, and each one has several rubber isolating elements, preferably five, arranged radially around it.

In addition, said rubber elements are positioned, each one of them, between two flanges, one of which, which shall be referred as inner, is anchored to the rolling bearing support itself of the roller shaft of the machine, and the other, which shall be referred as outer, is fastened to the supporting structure of the machine roller.

In this way, the link between the roller shaft and the link arm to the supporting structure is completely isolated by these rubber elements which, moreover, are arranged inclined or not on the surface of the crown with a constant angle in all of them, depending on the application and the ground.

The roller is therefore completely fastened to the supporting structure only by the isolating elements resulting in a flexible fastening and with six bounded degrees of freedom.

The rubber elements used have a good isolation of the vibrations and low mechanical loads in the position transverse to the securing direction and a lower insulation and high mechanical loads in the longitudinal direction to the securing with the supporting structure.

Therefore, if the arrangement of the rubber elements is perpendicular to the shaft of rotation, the insulation device provides great mechanical resistance but low insulation. And, as the angle of arrangement is modified and the rubber elements with respect to the shaft of rotation and they are oriented more in parallel to the longitudinal shaft of the roller, the isolation of the vibrations greatly increases and the resistance to mechanical loads decreases.

Therefore, the solution provided by the device allows, advantageously, to adjust the working angles of the rubber elements depending on the type of terrain, hard, soft ... etc., in which the machine to which it is incorporated must work, through the angle and tightening of the outer flanges that fasten the rubber elements on the inner flanges.

At the same time the structural configuration of the device allows to play with the hardness and dimensioning of the flexible rubber elements, adjusting them in the best possible way to the conditions of each case.

The described vibration isolation device for agricultural machines represents, therefore, an innovation with structural and constitutive characteristics unknown until now, reasons which, together with its practical usefulness, grant enough basis to obtain the exclusiveness privilege applied for.

### DESCRIPTION OF THE DRAWINGS

In order to complete the description being made and to ease a better understanding of the characteristics of the invention, it is attached to the present specification, making part of the same, a set of layouts where, with an illustrative non limitative character, the following has been represented:
Figure number 1.- shows a partial perspective view of the supporting structure with roller of an agricultural machine to which an example of the vibration isolation device, object of the invention, has been incorporated, the parts and elements that it comprises, as well as its configuration and disposition, being appreciated.
Figure number 2.- shows an almost front view of the roller and its supporting structure, where the interposition of the rubber element between the two flanges and which forms the isolation device according to the invention can be seen.
Figure number 3.- shows a side view of the roller and the supporting structure of the machine with the device of the invention.
Figure number 4.- shows a totally front elevation view of the roller, the inclination of rubber elements incorporating protruding at each end being appreciated.

And figure number 5.- shows, again a frontolateral perspective view, more enlarged, of the end of the roller in which the device of the invention is incorporated.

### PREFERRED EMBODIMENT OF THE INVENTION

In the light of the said figures, and according to their numbering, it can be seen on them a non-limiting example of the proposed vibration isolation device according to the invention for agricultural machines, which comprises the parts and elements that are indicated and described in detail below.

Thus, according to said figures, it can be seen how the device (1) in question, which is designed to be incorporated in an agricultural machine or similar, of which comprise at least one roller (2) coupled to it by means of a supporting structure (3) to which it is fastened at the ends thereof, which may or may not be provided with blades (4) or other working tools on its surface, the device (1) serving as an isolating means of the vibration that occurs when the roller (2) is dragged along the ground in a direction transverse to the longitudinal shaft (5) of rotation of said roller (2), it is formed, essentially, from two crowns (6) that are incorporated, opposed, one at each end of the roller (2), between the bearing support of its shaft (5) and the corresponding end of the supporting structure (3), each having several rubber isolating elements (7) distributed radially around it and secured, between respective pairs of flanges (8, 9) that fasten them, respectively, to said bearing support of the roller (5) shaft (5) and to the end of the supporting structure (3), so that they constitute a flexible link between both elements.

More specifically, the rubber isolating elements (7) are formed by a flat piece or disk, and each of them is fastened, as a sandwich, between an inner flange (8), which is anchored to the rotating bearing support itself of the shaft (5) of the roller(2), and an outer flange (9) that is fastened to the end of the supporting structure (3).

Also, these flanges (8, 9) have an inclined arrangement with respect to the plane of the crown (6) which, in turn, adopt the rubber isolating elements (7), which inclination, may or may not be constant in all of them , is variable in each case depending on the needs of use of the machine, since, the greater coplanarity with respect to the shaft (5) of rotation of the roller (2), greater isolation of vibrations but less mechanical resistance and, the greater the perpendicularity with respect to said shaft (5), less vibration isolation but greater mechanical resistance.

Optionally, the flanges, at least the outer ones (9) can be mobile, for example by means of screwing, in order to allow a slight modification of the inclination thereof and, consequently, of the rubber isolating elements (7).

In any case, in the preferred embodiment, each crown (6) incorporates five rubber isolating elements (7), distributed equidistantly around it, although this should not be taken as a limitation, since the essential of the device is the fact of comprising, at each end of the roller (2), and secured with variable inclination between the bearing support of the shaft (5) and the corresponding end of the supporting structure (3), several rubber isolating elements (7) distributed radially to said shaft (5), so that they constitute a flexible link between both elements.

Having sufficiently described the nature of the present invention, as well as a way of putting it into practice, it is not considered necessary to make a more extensive explanation in order that any expert in this area will understand its scope and the advantages that can be derived from it, making known that, within reason it could be put into practice in other embodiments differing in detail from that indicated by way of example, and which will obtain the same degree of protection, provided that they do not alter, change, or modify its fundamental principle.

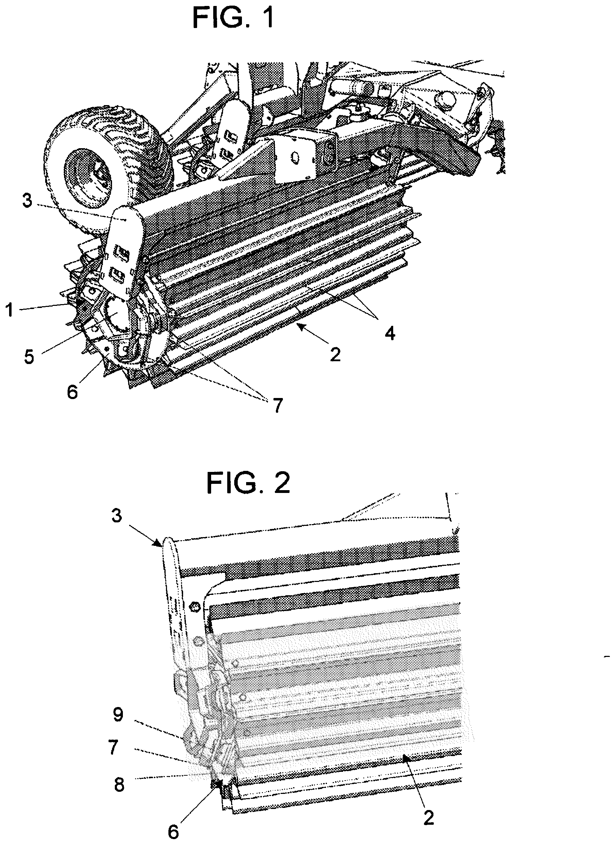

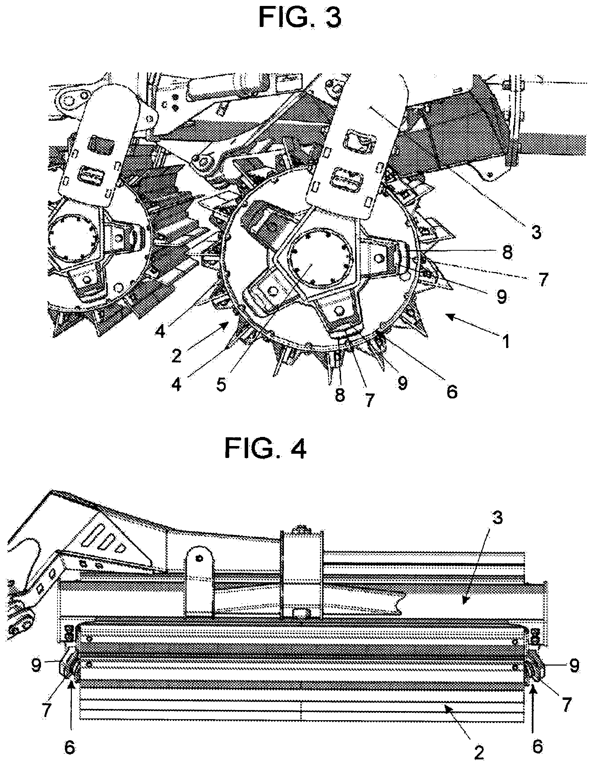

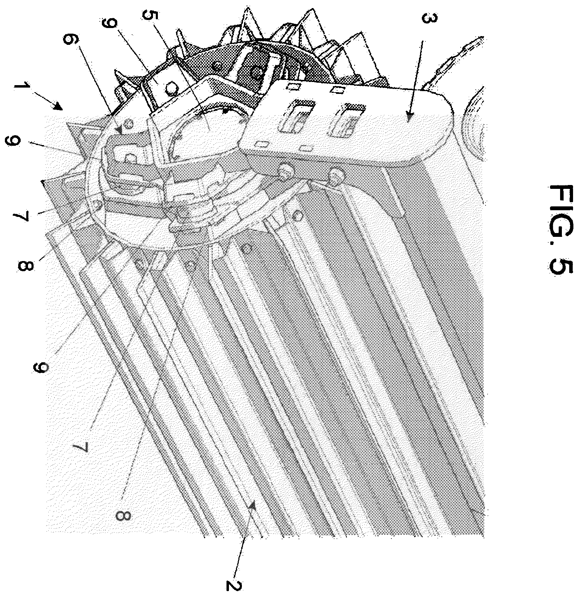

## Claims

1. VIBRATION ISOLATION DEVICE FOR AGRICULTURAL MACHINES, these machines comprising at least one roller (2) coupled with a supporting structure (3) to which the at least one roller (2) is fastened at the ends thereof, wherein the at least one roller (2) may or may not be provided with blades (4) or other working tools on its surface, wherein the vibration isolation device is applicable as an isolating means of the vibration that occurs when the roller (2) is dragged along the ground in a direction transverse to the longitudinal shaft (5) of rotation of the roller (2), the vibration isolation device comprising several rubber isolating elements (7) distributed radially to said shaft (5), so that they constitute a flexible link between roller and supporting structure at each end of the roller (2), whereby each rubber isolating elements (7) is secured with an inclination regarding the shaft (5), between the support of the bearing of the shaft (5) and the corresponding end of the supporting structure (3), **characterized in that** the rubber isolating elements (7) are incorporated in two crowns (6) that are configured to be incorporated, opposed, one at each end of the roller (2) between the bearing support of its shaft (5) and the corresponding end of the supporting structure (3), and **in that** the isolating elements (7) are secured between respective pairs of flanges (8, 9) that fasten them, respectively, to the bearing support of the shaft (5) of roller (2) and to the end of the supporting structure (3).

2. VIBRATION ISOLATION DEVICE FOR AGRICULTURAL MACHINES, according to claim 1, **characterized in that** the rubber isolating elements (7) are formed by a flat piece or disk, and each of them is fastened, as a sandwich, between an inner flange (8), which is anchored to the rotating bearing support itself of the shaft (5) of the roller (2), and an outer flange (9) that is fastened to the end of the supporting structure (3).

3. VIBRATION ISOLATION DEVICE FOR AGRICULTURAL MACHINES, according to claim 2, **characterized in that** the flanges (8, 9) have an inclined arrangement with respect to the plane of the crown (6) which, in turn, the rubber isolating elements (7) adopt.

4. VIBRATION ISOLATION DEVICE FOR AGRICULTURAL MACHINES, according to any of claims 1 to 3, **characterized in that** all rubber isolating elements (7) of each end of the roller (2) have the same inclination with the shaft (5).

5. VIBRATION ISOLATION DEVICE FOR AGRICULTURAL MACHINES, according to claim 3, **characterized in that**, at least, the outer flanges (9) are movable to allow to modify the inclination thereof and, consequently, of the rubber isolating elements (7).

6. VIBRATION ISOLATION DEVICE FOR AGRICULTURAL MACHINES, according to claim 1 **characterized in that** each crown (6) incorporates five rubber isolating elements (7), equidistantly distributed around it.

## Patentansprüche

1. SCHWINGUNGSISOLIERVORRICHTUNG FÜR LANDWIRTSCHAFTLICHE MASCHINEN, wobei diese Maschinen Folgendes umfassen:
mindestens eine Walze (2), die mit einer Tragstruktur (3) gekoppelt ist, an der die mindestens eine Walze (2) an ihren Enden befestigt ist, wobei die mindestens eine Walze (2) auf ihrer Oberfläche mit Klingen (4) oder anderen Arbeitswerkzeugen versehen sein kann oder nicht, wobei die Schwingungsisolationsvorrichtung als Isoliermittel für die Schwingungen anwendbar ist, die auftreten, wenn die Walze (2) in einer Richtung quer zur Längswelle (5) der Drehung der Walze (2) über den Boden gezogen wird, wobei die Schwingungsisolationsvorrichtung mehrere Gummiisolierelemente (7) umfasst, die radial zur Welle (5) verteilt sind, so dass sie an jedem Ende der Walze (2) eine flexible Verbindung zwischen der Walze und der Tragstruktur bilden,
wodurch
jedes Gummiisolierelement (7) ist mit einer Neigung zur Welle (5) zwischen der Halterung des Lagers der Welle (5) und dem entsprechenden Ende der Tragstruktur (3) befestigt,
**dadurch gekennzeichnet, dass** die Gummiisolierelemente (7) in zwei Kronen (6) eingebaut sind, die so konfiguriert sind, dass sie gegenüberliegend an jedem Ende der Walze (2) zwischen der Lagerhalterung ihrer Welle (5) und dem entsprechenden Ende der Tragstruktur (3) eingebaut werden können, und
dass die Isolierelemente (7) zwischen jeweiligen Flanschpaaren (8, 9) befestigt sind, die sie jeweils an der Lagerhalterung der Welle (5) der Walze (2) und am Ende der Tragstruktur (3) befestigen.

2. SCHWINGUNGSISOLIERVORRICHTUNG FÜR LANDWIRTSCHAFTLICHE MASCHINEN nach Anspruch 1, **dadurch gekennzeichnet, dass** die Gummiisolierelemente (7) durch ein flaches Stück oder eine Scheibe gebildet sind und jeweils in Sandwichform zwischen einem inneren Flansch (8), der an der rotierender Lagerhalterung selbst der Welle (5) der Walze (2) verankert ist, und einem äußeren Flansch (9), der am Ende der Tragkonstruktion (3) befestigt ist, befestigt sind.

3. SCHWINGUNGSISOLIERVORRICHTUNG FÜR LANDWIRTSCHAFTLICHE MASCHINEN, nach Anspruch 2, **dadurch gekennzeichnet, dass** die Flansche (8, 9) eine geneigte Anordnung gegenüber der Ebene der Krone (6) aufweisen, die wiederum die Gummiisolierelemente (7) übernehmen.

4. SCHWINGUNGSISOLIERVORRICHTUNG FÜR LANDWIRTSCHAFTLICHE MASCHINEN nach einem der Ansprüche 1 bis 3, **dadurch gekennzeichnet, dass** alle Gummiisolierelemente (7) an jedem Ende der Walze (2) die gleiche Neigung zur Welle (5) aufweisen.

5. SCHWINGUNGSISOLIERVORRICHTUNG FÜR LANDWIRTSCHAFTLICHE MASCHINEN nach Anspruch 3, **dadurch gekennzeichnet, dass** zumindest die Außenflansche (9) beweglich sind, um eine Änderung der Neigung derselben und damit der Gummiisolierelemente (7) zu ermöglichen.

6. SCHWINGUNGSISOLIERVORRICHTUNG FÜR LANDWIRTSCHAFTLICHE MASCHINEN nach Anspruch 1, **dadurch gekennzeichnet, dass** jede Krone (6) fünf Gummiisolierelemente (7) enthält, die in gleichem Abstand um sie herum verteilt sind.

## Revendications

1. DISPOSITIF D'ISOLATION DES VIBRATIONS POUR MACHINES AGRICOLES, ces machines comprenant
au moins un galet (2) couplé à une structure porteuse (3) à laquelle le au moins un galet (2) est fixé à ses extrémités, le au moins un galet (2) pouvant être pourvu ou non de lames (4) ou d'autres outils de travail sur sa surface, le dispositif d'isolation des vibrations étant applicable en tant que moyen d'isolation des vibrations qui se produisent lorsque le galet (2) est traîné sur le sol dans une direction transversale à l'arbre longitudinal (5) de rotation du galet (2), le dispositif d'isolation des vibrations comprenant plusieurs éléments isolants en caoutchouc (7) réparties radialement audit arbre (5), de sorte qu'elles constituent une liaison souple entre galet et structure porteuse à chaque extrémité du galet (2),
par lequel
chaque élément isolant en caoutchouc (7) est fixé en inclinaison par rapport à l'arbre (5), entre le support du palier de l'arbre (5) et l'extrémité correspondante de la structure porteuse (3),
**caractérisé en ce que** les éléments isolants en caoutchouc (7) sont incorporés dans deux couronnes (6) configurées pour être incorporées, opposées, une à chaque extrémité du galet (2), entre le support de palier de son arbre (5) et l'extrémité correspondante de la structure porteuse (3), et
**en ce que** les éléments isolants (7) sont fixés entre des paires respectives de brides (8, 9) qui les fixent, respectivement, au support de palier de l'arbre (5) du galet (2) et à l'extrémité de la structure porteuse (3).

2. DISPOSITIF D'ISOLATION DES VIBRATIONS POUR MACHINES AGRICOLES, selon la revendication 1, **caractérisé en ce que** les éléments isolants en caoutchouc (7) sont formés par une pièce plate ou un disque, et chacun d'eux est fixé, en sandwich, entre une bride intérieure (8), qui est ancrée au support de palier rotatif lui-même de l'arbre (5) du galet (2), et une bride extérieure (9) qui est fixée à l'extrémité de la structure porteuse (3).

3. DISPOSITIF D'ISOLATION DES VIBRATIONS POUR MACHINES AGRICOLES, selon la revendication 2, **caractérisé en ce que** les brides (8, 9) ont une disposition inclinée par rapport au plan de la couronne (6) que, à leur tour, les éléments isolants en caoutchouc (7) adoptent.

4. DISPOSITIF D'ISOLATION DES VIBRATIONS POUR MACHINES AGRICOLES, selon l'une quelconque des revendications 1 à 3, **caractérisé en ce que** tous les éléments isolants en caoutchouc (7) de chaque extrémité du galet (2) ont la même inclinaison avec l'arbre (5).

5. DISPOSITIF D'ISOLATION DES VIBRATIONS POUR MACHINES AGRICOLES, selon la revendication 3, **caractérisé en ce qu'**au moins les brides extérieurs (9) sont mobiles pour permettre de modifier l'inclinaison de ceux-ci et, par conséquent, des éléments isolants en caoutchouc (7).

6. DISPOSITIF D'ISOLATION DES VIBRATIONS POUR MACHINES AGRICOLES, selon la revendication 1, **caractérisé en ce que** chaque couronne (6) incorpore cinq éléments isolants en caoutchouc (7), répartis de manière équidistante autour d'elle.
